Europäisches Patentamt

European Patent Office

Office européen des brevets

(11) Publication number: **0 071 160**
**B1**

# EUROPEAN PATENT SPECIFICATION

(45) Date of publication of patent specification: **12.06.85**

(21) Application number: **82106547.1**

(22) Date of filing: **20.07.82**

(51) Int. Cl.⁴: **B 44 F 1/04, B 44 C 3/02, B 44 F 1/12, B 42 D 15/02, G 06 K 19/08**

(54) Plastic card having metallic luster.

(30) Priority: **21.07.81 JP 108214/81**
**26.12.81 JP 197149/81**
**26.12.81 JP 197150/81**

(43) Date of publication of application:
**09.02.83 Bulletin 83/06**

(45) Publication of the grant of the patent:
**12.06.85 Bulletin 85/24**

(84) Designated Contracting States:
**DE FR GB**

(56) References cited:
**EP-A-0 023 318**
**FR-A-2 316 666**
**FR-A-2 318 028**
**FR-A-2 372 476**

(73) Proprietor: **DAI NIPPON INSATSU KABUSHIKI KAISHA**
**1-1, Kaga-Cho 1-Chome Ichigaya Shinjuku-Ku Tokyo 162 (JP)**

(73) Proprietor: **TAIHEI KAGAKU SEIHIN KABUSHIKI KAISHA**
**2-4 Kyobashi 3-chome**
**Chuo-Ku Tokyo-To (JP)**

(72) Inventor: **Suzuki, Norimoto**
**5-473 Hanakoganei**
**Kodaira-shi, Tokyo-To (JP)**
Inventor: **Hayakawa, Fukuichiro**
**10-8 Azabu Juban 2-Chome**
**Minato-ku, Tokyo-To (JP)**

(74) Representative: **Patentanwälte Dipl.-Ing. Klaus Behn Dipl.-Phys. Robert Münzhuber**
**Widenmayerstrasse 6/IV**
**D-8000 München 22 (DE)**

Courier Press, Leamington Spa, England.

# Description

This invention relates to a plastic card having metallic luster.

In these days, an extremely great number of plastic cards as exemplified by identification cards, bank cards, membership cards, credit cards, etc. are being utilized. These cards are used as they are, or they are constituted to function as magnetic cards on which various kinds of information are recorded by magnetic recording methods.

In recent years, several cards of beautiful exterior appearance having metallic luster have been proposed. A card of this type of the prior art has a structure in which a printed layer with metallic luster is formed by printing a plastic sheet with a printing ink having a metallic luster pigment dispersed therein by off-set printing or screen printing, and a transparent plastic sheet is laminated on the printed layer. Another example of such a card has a structure in which a metallic luster powdery layer is formed by adhesion of metallic powders having metallic luster with an adhesive onto a plastic sheet, and a transparent sheet is laminated on said powdery layer.

However, it is difficult to obtain sufficient metallic luster because of technological difficulty in providing a thick metal luster printed layer or metal luster powdery layer. Another difficulty is that a transparent plastic sheet tends to be readily peeled off due to insufficient bonding between the transparent plastic sheet and a metal luster printed layer or a metal luster powdery layer.

For improvement of these points, an alternative structure in which a metal luster plastic sheet is prepared by dispersing by kneading a metal luster pigment into a transparent plastic sheet, and a transparent plastic sheet is laminated on this sheet has also been proposed. Also in this case, however, there are some problems due to greater particle size of metal luster pigments, as compared with common coloration pigments, and to very poor dispersibility of such pigments in plastics.

More specifically, when the pigment concentration is made higher to improve metal luster, the dispersibility of the pigment becomes worse, whereby irregularity is liable to occur in metal luster color formation, and the pigment adheres to a rolling roll during the step of preparation of the sheet to cause inconveniences in production procedures. Further, the physical properties such as tensile strength and impact of the sheet are lowered. For such reasons, a good plastic card has not yet been produced.

Also, because of the difficulty of obtaining a card with a high pigment concentration as mentioned above, the resultant card may sometimes be semi-transparent with a card thickness conventionally employed (i.e. 0.7—0.8 mm). As a consequence, when applying such a card in, for example, various card treatment devices, optical detection of the card position may sometimes disadvantageously fail because of excessively high light transmittance of the card.

An object of the present invention is to provide a plastic card having metallic luster in which the drawbacks of the prior art as described above have been overcome.

According to the results of our studies, it has been found very effective for accomplishment of the above object to use laminated metal luster layers formed by dividing a metal luster sheet as used in the metal luster card of the prior art into two layers and interposing a colored plastic sheet with a relatively deep color therebetween. Thus, it has been found that a metal luster of better appearance can be obtained without irregularity by laminated metal luster layers obtained by interposing a colored plastic sheet between a pair of plastic sheets containing relatively small amounts of a metal luster pigment than the single plastic sheet of the same thickness containing the metal luster pigment in a higher concentration. Therefore, with the use of such laminated metal luster layers, various problems accompanying the use of a plastic sheet containing a high concentration of a metal luster pigment can be solved.

The plastic card of the present invention is based on this finding. More particularly, it comprises a colored plastic sheet, metal luster plastic sheets containing a metal luster pigment and laminated on respective opposite surfaces of the colored plastic sheet, and transparent plastic sheets laminated on respective external surfaces of the metal luster plastic sheets.

In the drawing:

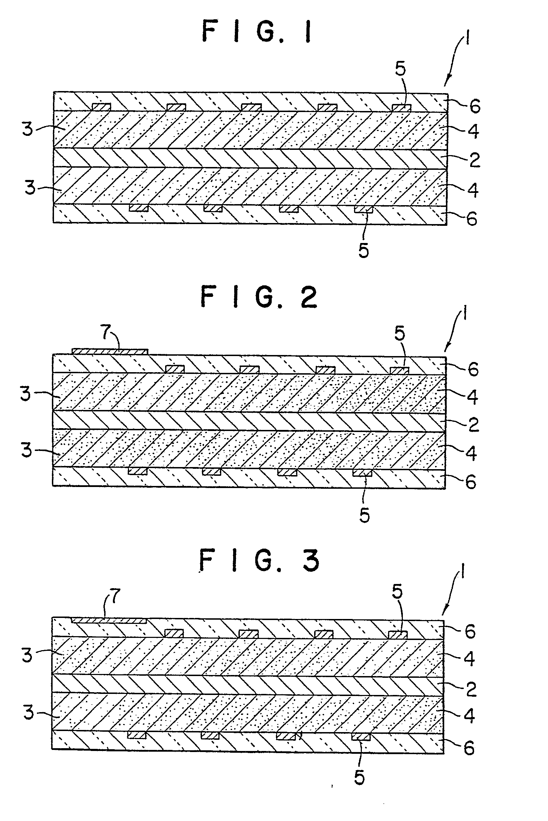

FIGS. 1, 2, and 3 are sectional views taken in planes parallel to the direction of thickness respectively of a preferred embodiment and modifications thereof of the plastic card of the present invention.

The present invention is described in detail below with respect to a preferred embodiment and modifications thereof shown in the accompanying drawings. In the following description, all quantities expressed in "parts" are by weight.

FIG. 1 shows a plastic card 1 having metal luster which is a preferred embodiment of the present invention. The plastic card 1 has metal luster plastic sheets 4 containing a metal luster pigment 3 and laminated respectively on opposite surfaces of a colored plastic sheet 2. Each of the metal luster plastic sheets 4 optionally has a visible recording layer 5 formed on its external surface, and has also a transparent plastic sheet 6 laminated on the external surface of the metal luster plastic sheet 4 so as to cover the visible recording layer 5. The thickness of the card as a whole is generally of the order of 0.7 to 0.8 mm.

The base resin materials constituting the colored plastic sheet 2, the metal luster plastic sheets 4 and the transparent plastic sheets 6 may be either the same or different, and can be selected from such materials as polyvinyl chloride, polyethylene, polypropylene, polyester, polystyrene, and polycarbonate. It is desirable to use a material with good transparency.

The colored plastic sheet 2 may be prepared by kneading a coloration pigment with the aforesaid resin under heating, and then by rolling or other treatment to form a sheet having a smooth surface. In the present invention, for imparting good metal luster to the resultant card by combination with the metal luster plastic sheets 4, the colored plastic sheet 2 is required to have a color which is relatively deep, preferably having a lightness in the range of from 0 to 3 according to the Munsell color system. For the purpose of providing a plastic card whose optical reading or positional detection can be readily carried out, it is desirable that the colored plastic sheet have an optical transmission density of 1.8 or more.

As a coloration pigment, any of the pigments selected from those which can give the above density, including, for example, black pigments such as carbon black, lamp black, and diamond black; gray pigments obtained by dilution of these black pigments with white pigments such as titanium white; and chromatic color pigments such as phthalocyanine blue, Watchung red, and titanium yellow may be employed. Such a pigment may be used in a quantity generally in the range of 0.5 to 15 parts based on 100 parts of the plastic, but a black pigment is used in a quantity of 0.5 to 5 parts, a gray pigment (prepared by dilution of a black pigment with, for example, 10- to 20-fold quantity of white pigment) in a quantity of about 5 to 15 parts. Thus, a black pigment is most preferable since it can give a deep colored plastic sheet with a small amount and can also produce a homogeneous and good metal luster by the combination with the metallic luster sheets 4. The colored plastic sheet 2 has a thickness which may freely be selected within the range to give the above density, but which is generally 0.1 to 0.4 mm when producing a plastic card with a thickness of about 0.7 to 0.8 mm.

The metallic luster plastic sheets can be obtained by kneading the metallic luster pigment with the above described resin under heating and thereafter forming the resultant mixture into sheets by rolling, etc. As the metallic luster pigment, for example, lead-based compounds such as basic lead carbonate, acidic lead arsenate; bismuth-based compounds such as bismuth oxychloride; mica-based pigments comprising mica flakes or mica flakes coated with titanium oxide; metal powders such as aluminum or brass; and fish scales may be used. These metallic luster pigments generally comprise particles of greater size than the coloration pigments which produce the colored plastic sheet 2 and are poorly dispersible in the regin. These metallic luster pigments are used generally in the range of from 1.0 to 10 parts based on 100 parts of a resin. In the case when a plastic card 1 with a thickness of 0.7 to 0.8 mm is to be obtained, metallic luster plastic sheets 4 each of a thickness of the order of 0.1 to 0.3 mm are used.

The transparent plastic sheets 6 can be prepared by forming the resin as described above into sheets. In a plastic card of a thickness of 0.7 to 0.8 mm, transparent plastic sheets each of a thickness of about 0.1 to 0.2 mm are used.

In the preparation of the colored plastic sheet 2, the metallic luster plastic sheets 4 and the transparent plastic sheets 6, small amounts of stabilizers and lubricants, in addition to the resin and the pigment, can be added, as desired at the time of heating and kneading.

The visible recording layers 5 are formed on respective external surfaces on the metallic luster plastic sheets 4 ordinarily by off-set printing or silk screen printing in order to provide patterns, figures, letters, etc.

In the preparation of the plastic card 1, on both surfaces of the colored plastic sheet 2, there are placed the metallic luster plastic sheets 4 having the visible recording layers 5 previously formed thereon, and after further placement of the transparent plastic sheets 6 on opposite surfaces, heating and pressing are applied to the resultant composite structure under an appropriate pressure and temperature to obtain the desired product. If necessary, it is also possible to employ an adhesive between the sheets.

In the foregoing description, the basic embodiment of the plastic card of the present invention has been described with reference to FIG. 1. This plastic card can be utilized for identification cards, member cards, credit cards, etc. However, the most attractive use of the plastic card of the present invention is that as a magnetic card. In this case, as shown in FIG. 2 or 3, a magnetic recording layer 7 in the shape of, for example, a stripe, comprising magnetic powder such as $\gamma$-$Fe_2O_3$ dispersed in a thermoplastic or thermosetting resin binder, is formed on (FIG. 2) or embedded in (FIG. 3) at least one of the transparent plastic sheets 1. The structure of FIG. 3 can be obtained by forming previously the magnetic recording layer 7 on one of the transparent plastic sheets 6 and then laminating the colored plastic sheet 2, a pair of the metallic luster plastic sheets and the other transparent plastic sheet thereon under heating and pressing.

The thus prepared plastic card (magnetic card) 1, while maintaining a relatively thin total thickness (approximately 0.7 to 0.8 mm), has a good metallic luster due to the presence of the deep colored plastic sheet 2, and it also satisfies the standard of the light transmission density of 2.0 or more according to the Japanese Industrial Standard (JIS B 9560) concerning credit cards equipped with magnetic stripes. In particular, when a black colored plastic sheet 2 is employed, a card with an optical transmission density of 5.0 or more can be easily obtained. Thus, detection of the card position by means of a card treating device can be positively carried out without any trouble in optical reading.

As described above, the plastic card of the present invention can exhibit very beautiful metallic luster even with a small content of a metallic pigment because it can markedly improve the aesthetic effect of the metallic luster plastic sheet by provision of a colored plastic sheet, thus having a great effect in design. Further, it has various other advantages such as easy preparation and low cost.

The present invention will now be further illustrated by way of the following examples of preparation of the plastic card according to the present invention.

### Example 1

After kneading 100 parts of a polyvinyl chloride, 3.0 parts of a tin-based stabilizer (dibutyl tin maleate), 2.0 parts of a lubricant and 4.0 parts of carbon black under heating, the mixture was molded into a black plastic sheet with a thickness of 0.1 mm. Separately, after kneading 100 parts of polyvinyl chloride, 3.0 parts of the tin-based stabilizer, 2.0 parts of a lubricant (stearyl alcohol) and 5.0 parts of a metallic luster pigment (a lead carbonate-based pigment, average diameter: 30—70 µm; trade name: Pearl Essence DC HG Gold produced by Nippon Koken Kogyo K.K.), the mixture was molded into two sheets of a metallic luster sheet with a thickness of 0.23 mm. On these sheets, there were formed visible recording layers such as patterns or figures by off-set printing. Next, on both sides of the black plastic sheet, the metallic luster plastic sheets with the visible recording layers were superposed with the visible recording layers as external sides. This step was followed by lamination of transparent plastic sheets made of transparent rigid polyvinyl chloride. Then, the composite structure was placed between mirror-finished stainless steel luster plates and heated and pressed at 150°C under a pressure of 30 Kg/cm² for 10 minutes, whereby fusion adhesion was fully accomplished to produce a plastic card having a beautiful metallic luster.

The optical transmission density of the plastic card was measured by a Macbeth TD404 optical transmission densitometer (Filter: Latten #106) to be 5.5.

### Example 2

Example 1 was repeated except that a mixture of pigments of 1.0 part of carbon black and 10 parts of titanium white was used in place of 4.0 parts of carbon black to obtain a gray plastic sheet with a thickness of 0.1 mm in place of the black plastic sheet.

Using this gray plastic sheet, and otherwise following the procedure as in Example 1, a plastic card which had a beautiful metallic luster was prepared. The plastic card was found to have an optical transmission density of 3.0.

### Example 3

Example 1 was repeated except that a mixture of pigments of 5.0 parts of phthalocyanine blue and 10 parts of titanium white was used in place of 4.0 parts of carbon black to obtain a blue plastic sheet with a thickness of 0.1 mm.

Using this blue plastic sheet in place of the black plastic sheet, and otherwise following the procedure as in Example 1, a plastic card which had a beautiful metallic luster was prepared. The plastic card was found to have an optical transmission density of 2.5.

### Example 4

The whole procedure of Example 1 was repeated except that 9 parts of a mica-based metallic luster pigment (Trade name: "AFFLAIR" GOLD NF-144D produced by MERCA Co.) was used in place of 5 parts of the lead carbonate based pigment.

The resultant plastic card was found to have an equally beautiful metallic luster and an optical transmission density of 5.5.

### Claims

1. A plastic card having metallic luster which comprises a colored plastic sheet (2), metallic luster plastic sheets (4) containing a metallic luster pigment (3) and laminated on respective opposite surfaces of the colored plastic sheet (2), and transparent plastic sheets (6) laminated on respective outer surfaces of the metallic luster plastic sheets (4).

2. A plastic card according to claim 1, wherein the colored plastic sheet (2) has a lightness of 0 to 3 according to the Munsell color system.

3. A plastic card according to claim 1 or claim 2, wherein the colored plastic sheet (2) has a light transmission density of 1.8 or more.

4. A plastic card according to any of claims 1 to 3, wherein the colored plastic sheet (2) is colored black.

5. A plastic card according to any of claims 1 to 3, wherein the colored plastic sheet (2) is colored gray.

6. A plastic card according to any of claims 1 to 3, wherein the colored plastic sheet (2) has a chromatic color.

7. A plastic card according to any of claims 1 to 6, having further a magnetic stripe (7) provided on at least one of the transparent plastic sheets (6).

8. A plastic card according to any of claims 1 to 6, having further a magnetic stripe (7) embedded in at least one of the transparent plastic sheets (6) so that the outer surfaces of the stripe (7) and the sheet (6) lie flush in the same plane.

### Patentansprüche

1. Kunststoffkarte mit Metallglanz, gekennzeichnet durch eine eingefärbte Kunststoffschicht (2), durch Metallglanz-Kunststoffschichten (4), die ein Metallglanz-Pigment (3) enthalten und auf einander gegenüberliegende Oberflächen der eingefärbten Kunststoffschicht (2) aufgeschichtet sind, und durch transparente Kunststoffschichten (6), die auf entsprechende äußere Oberflächen der Metallglanz-Kunststoffschichten (4) aufgeschichtet sind.

2. Kunststoffkarte nach Anspruch 1, dadurch gekennzeichnet, daß die eingefärbte Kunststoffschicht (2) einen Helligkeitsgrad von 0 bis 3 aufweist, und zwar gemäß dem Munsell-Farbsystem.

3. Kunststoffkarte nach Anspruch 1 oder 2, dadurch gekennzeichnet, daß die eingefärbte Kunststoffschicht (2) eine Nicht-Durchlaßdichte von 1,8 oder mehr aufweist.

4. Kunststoffkarte nach einem der Ansprüche 1 bis 3, dadurch gekennzeichnet, daß die eingefärbte Kunststoffschicht (2) schwarz eingefärbt ist.

5. Kunststoffkarte nach einem der Ansprüche 1 bis 3, dadurch gekennzeichnet, daß die eingefärbte Kunststoffschicht (2) grau eingefärbt ist.

6. Kunststoffkarte nach einem der Ansprüche 1 bis 3, dadurch gekennzeichnet, daß die eingefärbte Kunststoffschicht (2) eine chromatische Farbe aufweist.

7. Kunststoffkarte nach einem der Ansprüche 1 bis 6, gekennzeichnet durch einen Magnetstreifen (7), der auf zumindest einer der transparenten Kunststoffschichten (6) vorgesehen ist.

8. Kunststoffkarte nach einem der Ansprüche 1 bis 6, gekennzeichnet durch einen Magnetstreifen (7), derin zumindest eine der transparenten Kunststoffschichten (6) derart eingebettet ist, daß die äußeren Oberflächen des Streifens (7) und der Schicht (6) fluchtend in der gleichen Ebene liegen.

**Revendications**

1. Carte de matière plastique ayant un éclat métallique, qui comprend une feuille colorée (2) de matière plastique, des feuilles (4) de matière plastique à éclat métallique, contenant un pigment (3) à éclat métallique et collées sur les faces opposées respectives de la feuille colorée (2) de matière plastique, et des feuilles transparentes (6) de matière plastique collées aux face externes respectives des feuilles (4) de matière plastique à éclat métallique.

2. Carte de matière plastique selon la revendication 1, dans laquelle la feuille colorée (2) de matière plastique a une intensité lumineuse de 0 à 3 selon le système de couleurs Munsell.

3. Carte de matière plastique selon l'une des revendications 1 et 2, dans laquelle la feuille colorée (2) de matière plastique a une densité lumineuse par transmission de 1,8 ou plus.

4. Carte de matière plastique selon l'une quelconque des revendications 1 à 3, dans laquelle la feuille colorée (2) de matière plastique est de couleur noire.

5. Carte de matière plastique selon l'une quelconque des revendications 1 à 3, dans laquelle la feuille colorée (2) de matière plastique est de couleur grise.

6. Carte de matière plastique selon l'une quelconque des revendications 1 à 3, dans laquelle la feuille colorée (2) de matière plastique a une couleur chromatique.

7. Carte de matière plastique selon l'une quelconque des revendications 1 à 6, ayant en outre une bande magnétique (7) disposée sur l'une au moins des feuilles transparentes (6) de matière plastique.

8. Carte de matière plastique selon l'une quelconque des revendications 1 à 6, ayant en outre une bande magnétique (7) enrobée dans au moins l'une des feuilles transparentes (6) de matière plastique de manière que les faces externes de la bande (7) et de la feuille (6) se trouvent de niveau dans un même plan.

# F I G. 1

# F I G. 2

# F I G. 3